# FASCICULE DE BREVET EUROPEEN

(11) **EP 0 512 881 B1**
(45) Date de publication et mention de la délivrance du brevet: **12.02.1997**
(21) Numéro de dépôt: 92401153.9
(22) Date de dépôt: 23.04.1992
(51) Int. Cl.: H04L 12/56

(54) **Procédé et dispositif de sélection d'informations utilisables par une unité locale reliée à un système de transmission numérique**
Verfahren und Gerät zur Nachrichten-Auswahl, die von einer mit einem digitalen Übertragungssystem verbundenen lokalen Einheit verwendbar sind
Apparatus and method for the selection of information usable by a local unit linked to a digital transmission system

(30) Priorité: 07.05.1991 FR 9105565
(43) Date de publication de la demande: 11.11.1992
(73) Titulaire: SEXTANT AVIONIQUE S.A., F-92366 Meudon la Forêt Cédex (FR)
(72) Inventeur: Pitot, Christian, F-92100 Boulogne (FR)
(74) Mandataire: de Saint-Palais, Arnaud Marie

(56) Documents cités:
- EP-A- 0 255 767
- US-A- 4 493 021
- A.V.AHO ET AL: 'DATA STRUCTURES ET ALGORITHMS' 1983 , ADDISON-WESLEY , READING,US
- JOURNAL OF GUIDANCE AND CONTROL. vol. 6, no. 2, Mars 1983, NEW YORK US pages 120 - 123; R.K.CHUN: 'ARINC 429 DIGITAL DATA COMMUNICATIONS FOR COMMERCIAL AIRCRAFT'

## Description

La présente invention concerne, d'une façon générale, un procédé et un dispositif de sélection d'informations utilisables par une unité locale reliée à un système de transmission numérique, dans lequel le critère de sélection utilisé fait partie du message transmis et se trouve en tête de celui-ci.

Elle s'applique notamment au tri, lors de leur réception, d'informations numériques en provenance d'une ou plusieurs lignes de transmission indépendantes, cette information étant reçue de façon séquentielle et organisée dans le temps, de manière à ce que l'information nécessaire à la sélection soit connue préalablement à l'information utile proprement dite, et que le tri puisse être exécuté avant la fin de la transmission du message en cours sur la voie considérée.

Un tel dispositif est par exemple décrit dans le brevet US 4 493 021. Cependant, ce dispositif utilise une mémoire spécifique du type adressable par le contenu présentant des performances inférieures à celles des mémoires classiques, et ne permet pas de spécifier des conditions de sélection complexes.

L'invention a plus particulièrement pour but, mais non exclusivement, un dispositif de ce genre, réalisé sous la forme d'une unité d'interface hautement intégrée, entre un processeur et une ou plusieurs lignes de transmission de type série sur lesquelles transitent des informations sous la forme d'une succession de mots présentant chacun une trame préétablie, par exemple conformes à la norme ARINC 429 en usage dans l'aéronautique.

On sait que, conformément à cette norme, chaque mot (de 32 bits) comprend successivement :
- un premier nombre de huit bits (de 0 à 7) définissant une étiquette ou "label" ;
- un second nombre de deux bits (8 et 9) servant à identifier la source ou la destination du mot (SDI) ;
- un troisième nombre de vingt et un bits (10 à 30) contenant les données à transmettre ; et
- un bit de parité (bit 31).

Bien entendu, cette norme impose un certain nombre de conditions (gabarits) notamment en ce qui concerne :
- les temps minima et maxima associés à la transmission d'un bit d'information ;
- le rapport cyclique de la modulation ;
- l'intervalle de temps "Gap" entre deux mots ;
- le nombre de bits par mots (ici 32 bits) ;
- la parité des mots.

Dans ce type d'application, l'invention propose d'effectuer, avant de transmettre chaque mot, un tri portant non seulement sur la conformité du mot aux gabarits précédemment énumérés mais également sur la pertinence de ce mot pour le processeur, et ce, sans faire appel pour cela à des mémoires de personnalisation externe.

Pour parvenir à ces résultats, l'invention propose, d'une façon générale, un procédé pour la sélection d'informations numériques à transmettre à un système hôte, ces informations pouvant provenir de plusieurs voies de transmission indépendantes, et étant présentées sous la forme de messages émis séquentiellement et organisés de manière à comprendre l'information utile précédée dans le temps par une information de sélection.

Selon l'invention, ce procédé est caractérisé en ce qu'il comprend :
- la scrutation cyclique, à fréquence fixe, d'une liste de conditions programmées et mises en mémoire, chaque condition spécifiant des contrôles auxquels doit satisfaire l'information de sélection des messages intéressant le système hôte ;
- l'acquisition simultanée des informations sur lesdites voies ;
- l'activation d'un processus de sélection chaque fois que l'information de sélection d'un message reçu sur une voie a été acquise, ce processus de sélection comportant une étape de synchronisation consistant en une attente du passage du processus de scrutation par la position de début de la liste de conditions, une séquence de comparaison ("pattern matching") consistant à appliquer à l'information de sélection contenue dans le message en cours de réception les contrôles spécifiés par les conditions déterminées successivement par le processus de scrutation de la liste de conditions, et l'élaboration d'une variable de sélection qui indique si le message en cours de réception intéresse le système hôte ou non, la fin du processus de sélection étant obtenue soit par l'épuisement de toutes les conditions de la liste et le retour vers la condition de début de liste, soit par lecture d'un code spécial dit code fin de liste ;
- la mémorisation des messages sélectionnés dans une mémoire tampon accessible par le système hôte.

Avantageusement, chacune des susdites conditions consiste en un mot binaire de sélection comprenant au moins autant de bits que n'en possèdent les informations de sélection contenues dans les messages, la comparaison s'effectuant bit par bit.

Avantageusement, les mots de sélection pourront en outre comprendre des bits supplémentaires correspondant à des traitements à faire subir au message.

Par ailleurs, les mots de sélection pourront comprendre des masques.

Dans ce cas, il sera considéré qu'il y a coïncidence entre l'information de sélection contenue dans un message et un mot de sélection de la liste de conditions, si ces deux informations ne diffèrent que par des bits pour lesquels un masquage a été défini.

Le dispositif pour la mise en oeuvre du procédé précédemment décrit peut se présenter sous la forme d'une unité d'interface d'entrée/sortie hautement intégrée entre une unité locale à microprocesseur et une ou plusieurs lignes de transmission de type série sur lesquelles circulent des informations conformes à la norme ARINC 429 et composée de mots de 32 bits présentant la trame précédemment indiquée, les transferts entre cet interface et l'unité locale s'effectuant par des mots de 16 bits.

Un mode d'exécution de l'invention sera décrit ci-après, à titre d'exemple non limitatif, avec référence aux dessins annexés dans lesquels :
La figure 1 est un schéma théorique illustrant le mode de branchement d'un interface selon l'invention entre un processeur et deux paires de voies de transmission (deux voies d'émission et deux voies de réception) ;
La figure 2 est un schéma synoptique de l'interface représenté sur la figure 1.

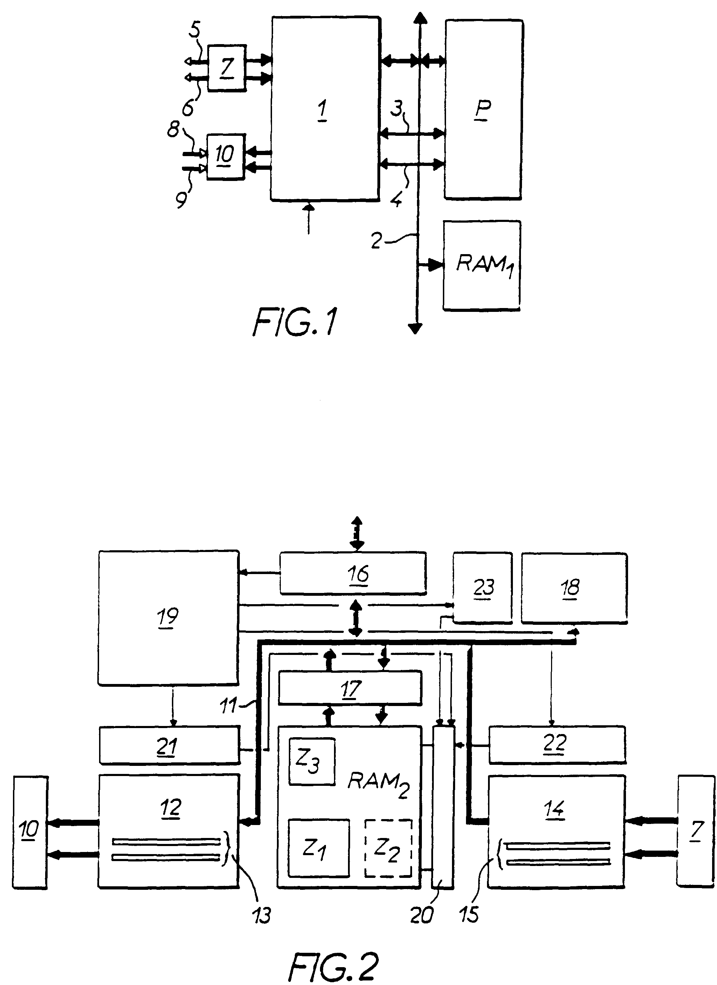

Dans l'exemple représenté sur la figure 1, l'interface d'entrée/sortie selon l'invention qui est représenté par un bloc 1, est connecté, d'une part, à une unité locale à microprocesseur P associé à une mémoire vive RAM₁ par l'intermédiaire d'un bus de données 2, de contrôle 3 et d'adressage 4 et, d'autre part, à deux voies 5, 6 de réception d'informations conformes à la norme ARINC 429, par l'intermédiaire d'un démodulateur 7 et à deux voies 8, 9 d'émission d'informations par l'intermédiaire d'un modulateur de ligne 10.

Cet interface d'entrée/sortie 1 fait intervenir, connectés par un bus interne 11 :
- un bloc d'émission 12 connecté au modulateur 10 et utilisant une mémoire tampon formée de deux registres 13 de 16 bits permettant de stocker le demi-mot en cours d'émission sur chacune des voies ; ces tampons constituent un prolongement de la zone mémoire Z₁ décrite ci-après et dans laquelle les mots sont organisés en file d'attente ;
- un bloc de réception 14 connecté au démodulateur 7 et utilisant une mémoire tampon formée de deux registres 15 de 16 bits permettant d'accumuler les bits des demi-mots ARINC reçus sur chacune des deux voies avant leur transfert dans la zone mémoire Z₂ décrite ci-après ;
- un interface de liaison 16 (16 bits) avec l'unité locale à microprocesseur P ;
- une mémoire vive RAM₂ associée à un circuit de gestion des données 17, cette mémoire vive RAM₂ pouvant constituer le prolongement des deux mémoires tampon 13, 15 ;
- un dispositif de reconnaissance de messages "pattern matching" 18 recherchant les coïncidences entre les critères de sélection des mots en cours de réception sur les deux voies et les codes dits codes de piège à "labels" stockés dans la zone Z₃ de la RAM₂, ces codes étant présentés séquentiellement par un pointeur de pièges à "labels" 23 ;
- un automate 19 servant à piloter un générateur d'adresse 20 associé à la mémoire RAM₂ par l'intermédiaire d'un pointeur d'émission 21, d'un pointeur de réception 22, et d'un pointeur de piège à "labels" 23.

L'émission de mots ARINC sur les deux voies 8, 9 peut s'effectuer à des fréquences programmables, par exemple de 12,5, 100 et 1000 kHz.

Les mots à émettre sont formatés et chargés par le processeur P dans une mémoire (par exemple une zone de la RAM₂). Pour chaque voie, la génération de la parité et du gabarit, le séquencement de l'émission et la sérialisation sont assurés en interne.

Les mots ARINC à émettre, complétés par les bits SDI, sont fournis par le processeur P et stockés dans la zone mémoire Z₁ de la RAM₂ avant leur sérialisation.

Cette zone mémoire Z₁ est gérée à la façon d'une pile FIFO, avec allocation dynamique, afin d'optimiser son occupation en fonction de la vitesse programmée pour chacune des deux voies 8, 9, et sa capacité est de 32 mots ARINC pour l'ensemble des deux voies.

Le chargement d'un mot ARINC (32 bits) dans la zone mémoire Z₁ sera déclenché par l'unité locale s'effectuant en deux temps successifs : transfert des 16 bits de poids faible puis des 16 bits de poids forts. La sérialisation effectuée d'un mot ARINC sur une voie 8, 9 désirée ne peut alors s'effectuer que lorsque :
- ses demi-mots ont été chargés par l'unité locale (processeur P) dans la zone mémoire Z₁ ;
- l'ensemble des mots précédemment transmis vers cette voie ont été totalement émis.

Le 32^{ème} bit du mot ARINC qui définit la parité du mot est calculé en interne.

La fréquence d'émission est définie par un mot de programmation émis par l'unité locale (processeur P).

L'émission débute sur une voie dès qu'un mot complet a été chargé dans une paire de mots de 16 bits d'adresses consécutives allouée en zone Z₁ à la voie considérée par le dispositif d'allocation dynamique contenu dans le pointeur d'émission 21.

La réception des mots ARINC provenant des voies 5, 6 s'effectue comme suit :

Chaque mot reçu ayant satisfait aux contrôles demandés dans un mot de programmation et possédant une information de sélection (qui comprend ici l'ensemble "label"-SDI-voie) identifié par le dispositif de reconnaissance des messages, est mis en mémoire après substitution de son 32^{ème} bit de parité par le numéro de voie sur lequel il est arrivé dans une zone Z₂ de la mémoire RAM₂ gérée en pile FIFO de capacité de 64 mots ARINC.

La restitution complète d'un mot ARINC ainsi stocké sera déclenchée par le processeur P et nécessite deux phases de lecture successive de cette dernière, à savoir :
- une phase de lecture des 16 bits de poids faible pf ;
- une phase de lecture des 16 bits de poids forts PF.

Lorsque la zone de mémoire Z₂ gérée en pile FIFO est vide, les deux lectures déclenchées par l'unité centrale se concluront par la restitution d'un code spécial, par exemple 0000 h.

Comme précédemment mentionné, avant de pouvoir être transféré dans la zone de mémoire Z₂, le mot en cours de réception subit un certain nombre de contrôles dont la nature est programmable dans le mot de programmation.

Les anomalies pouvant conduire au rejet de ce mot sont par exemple les suivantes :
- rapport cyclique hors norme (non compris dans une fourchette de valeur prédéterminée) ;
- vitesse non homogène (si tous les bits ne sont pas reçus à la même vitesse) ;
- vitesse hors gabarit ;
- défaut de "gap" (si la durée de l'intervalle qui sépare du début du mot suivant est inférieure à une valeur déterminée) ;
- réception simultanée d'un état logique haut sur les deux broches H et L d'une même voie ARINC ;
- défaut de parité (par exemple la parité d'un mot n'est pas impaire à l'issue de la réception de ses 32 bits).

Le dispositif de reconnaissance de l'information de sélection contenue dans les messages assure deux fonctions distinctes :
1) Il permet de sélectionner les mots ARINC qui devront être réceptionnés dans la zone mémoire Z₂ (grâce aux informations contenues par les ensembles "Label"-SDI-VOIE qui caractérisent chacun d'eux).
2) Il permet l'émission d'interruptions vers l'unité locale (processeur P) lors de la réception de mots ARINC comprenant des ensembles "Label"-SDI-VOIE remarquables.

Les deux fonctions sont réalisées en effectuant une comparaison séquentielle de l'ensemble "Label"-SDI-VOIE de chaque mot nouvellement reçu avec l'ensemble des codes contenus dans une table interne : les pièges à "labels".

Cette table est physiquement réalisée par une zone Z₃ de la mémoire RAM₂ et peut par exemple présenter une capacité de stockage de 64 mots de 16 bits chacun.

Elle devra être séquentiellement préchargée par l'unité locale (processeur P) après l'initialisation de l'interface 1 dans le mode alors présent prévu à cet effet.

Le processus de scrutation des codes contenus dans la table est un processus par exemple d'une durée de 128 périodes d'horloge de base du circuit et permettant de lire successivement les 64 positions de la liste. Il est activé automatiquement par la réception du 10ème bit du mot ARINC en cours de réception. La synchronisation de ce processus de sélection s'effectue lors du passage du pointeur de liste à l'adresse zéro de la liste de conditions qui synchronise la tâche de sélection et la tâche de scrutation du piège à "labels".

On considère qu'il y a identité entre l'ensemble "Label"-SDI-VOIE d'un mot nouvellement reçu et un des pièges à "labels" programmés par l'unité locale si les trois conditions suivantes sont respectées :
1) Les "labels" reçu et programmé sont identiques, ou ne diffèrent que par des bits pour lesquels un masquage a été défini.
2) Les SDI reçu et programmé sont identiques ou sont soumis à un masquage.
3) Les numéros de voie reçu et programmé sont identiques ou sont soumis à un masquage.

Le dispositif de reconnaissance précédemment décrit a pour objet d'élaborer une variable de sélection de laquelle dépendra le maintien ou le rejet du mot.

Bien entendu, au moment de la synchronisation du processus de scrutation de la liste de conditions, la variable de sélection est à zéro. A partir de cet instant, à chaque lecture d'une condition nouvelle de la liste et ce, jusqu'à épuisement de celle-ci (ou la lecture d'un mot de fin de liste), la valeur de la variable de sélection va être réévaluée en appliquant les règles indiquées par la suite qui dépendent de la nature des codes utilisés.

Dans cet exemple, les codes définissables par l'unité locale peuvent être de trois types différents :
- les bases,
- les altérations de base,
- le mot de fin de liste.

Une base est un mot binaire de 16 bits dans lequel :
- les bits de 0 à 7 correspondent au "label" programmé qui est comparé au "label" reçu ;
- les bits 8 et 9 correspondent au SDI programmé qui est comparé au SDI reçu ;
- le bit 10 correspond au numéro de voie qui est comparé au numéro de voie reçu ;
- le bit 11 caractérise le fait que le code actuel est une base ;
- le bit 12 permet le masquage de la comparaison entre les SDI ;
- le bit 13 permet le masquage de la comparaison entre les numéros de voie ;
- le bit 14 permet, si l'identité est établie avec le code actuel, d'annuler l'effet d'une identité précédemment établie avec un autre code (inversion de condition) ;
- le bit 15 permet de considérer l'ensemble "Label"-SDI-Voie associé au mot ARINC en cours de réception comme "remarquable" si le code actuel parvient à établir l'identité.

Une altération de base est un mot binaire de 16 bits dans lequel :
- les bits de 0 à 7 qui correspondent au "label", permettent le masquage de la comparaison entre certains bits des "labels" et les bits de même position de la base ainsi altérée ;
- les bits 8 à 10 sont des bits devant être forcés à zéro ;
- le bit 11 caractérise le fait que le code actuel est une altération de base (les caractéristiques de la base à laquelle cette altération est associée étant conservées) ;
- les bits 12 à 15 sont des bits devant être forcés à zéro.

Le mot de fin de liste est un mot binaire de 16 bits qui permet de spécifier l'extrémité de la table de pièges à "labels" lorsque celle-ci ne nécessite pas d'être programmée dans son intégralité.

Les codes prenant place à la suite de ce mot de fin de liste ne pourront donc pas participer à l'analyse de l'identité de l'ensemble "Label"-SDI-Voie associé au mot ARINC en cours de réception. Sa valeur caractéristique est, par exemple, FF00 h (huit premiers bits à 1, huit derniers bits à 0).

Les exemples figurant ci-après permettront de mieux comprendre le principe de la programmation effectué par les codes de programmation de la table, qu'il s'agisse de base, d'altération de base ou d'une fin de liste.

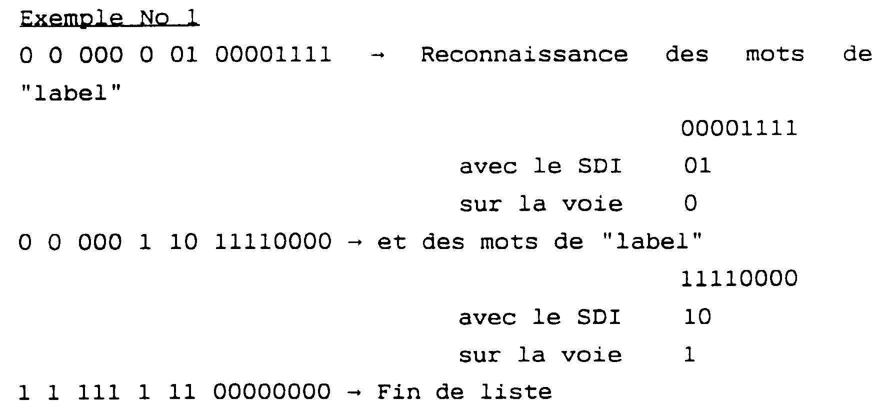

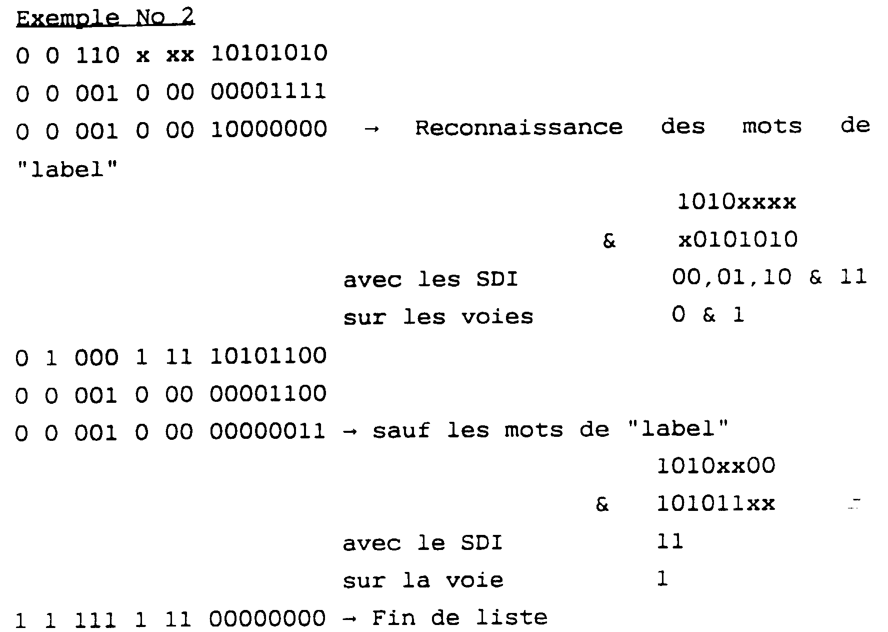

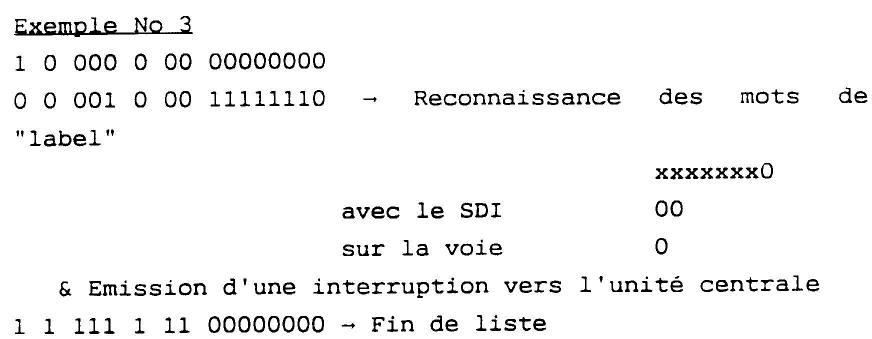

Compte tenu de ce qui précède, la valeur de la variable de sélection sera déterminée en appliquant les règles suivantes :
a) Dans le cas où la condition est une base, et où les valeurs N° Voie/SDI/"label" qui caractérisent le mot en cours de réception coïncident avec le code de base :
   . Si le bit d'inversion vaut 0, la variable de sélection est mise à 1,
   . Si le bit d'inversion vaut 1, la variable de sélection est mise à 0.

   Dans les autres cas, la variable de sélection est inchangée.
b) Dans le cas où la condition est une altération de base et où les valeurs N° Voie/SDI/"label" qui caractérisent le mot en cours de réception coïncident avec le code de la précédente base reçue modifiée dans le sens d'un élargissement de la condition par l'intermédiaire des positions indifférentes apportées par l'altération de base en cours :
   . Si le bit d'inversion vaut 0, la variable de sélection est mise à 1,
   . Si le bit d'inversion vaut 1, la variable de sélection est mise à 0.
c) Dans le cas où la condition est une fin de liste :
   . La valeur de la variable de sélection est la valeur définitive.

Comme précédemment mentionné, la séquence de contrôles effectués sur les mots ARINC en cours de réception est définie par programme (mot de programmation) et donne lieu à un mot d'état de 16 bits qui permet d'informer l'unité locale aussi bien sur l'état dans lequel se trouve l'interface que sur les caractéristiques des transmissions effectuées. Ce mot d'état est un mot de 16 bits dans lequel :
- les bits 0 et 1 désignent la vitesse d'émission des mots ARINC sur la première voie (trois vitesses possibles) ;
- les bits 2 et 3 désignent la vitesse d'émission des mots ARINC sur la deuxième voie ;
- les bits 4 et 5 définissent le mode de fonctionnement:
   00 - application
   01 - pièges à "labels"
   10 - test RAM réception
   11 - test RAM émission
- les bits 6 à 9 assurent une validation d'interruption lorsque :
   - la pile FIFO d'émission devient vide (bit 6),
   - la pile FIFO de réception devient vide (bit 7),
   - la pile FIFO d'émission déborde (bit 8),
   - la pile FIFO de réception déborde (bit 9).

Lorsqu'une anomalie dont le contrôle a été programmé dans le mot de programmation est détectée sur l'une des deux voies, il y a alors mise à jour du mot d'état, par ajout de l'indicateur caractéristique de cette anomalie.

Lors d'une remise à zéro, tous les contrôles en réception sont invalidés (bits 10 à 15), toutes les interruptions demandées par les piles FIFO sont invalidées (bits 6 à 9), le mode de fonctionnement (bits 4 et 5) est placé sur "piège à labels", et les émissions sur les deux voies sont inhibées (bits 32 et 10 respectivement égaux à 0).

La gestion des interruptions s'effectue grâce à un vecteur d'interruption que l'unité de calcul vient lire quant elle reçoit une interruption, de manière à connaître la raison de cette interruption.

Ce vecteur d'interruption consiste en un mot de 16 bits dans lequel :
- les bits 15 à 9 définissent le nombre de mots ARINC stockés dans la pile FIFO de réception 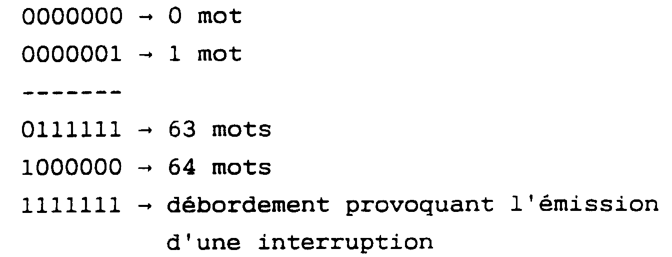
- les bits 8 à 3 définissent le nombre de mots ARINC stockés dans la pile FIFO d'émission : 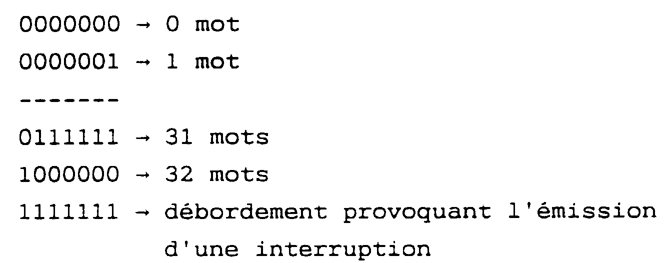
- le bit 2 indique une interruption à la suite de la réception d'un mot dont le "label" contient un indicateur ("flag") ;
- le bit 1 indique une interruption provoquée à la suite d'une anomalie en réception, sur l'une des voies ;
- le bit 0 indique une interruption provoquée à la suite d'une anomalie en réception, sur l'autre voie.

Les échanges entre le processeur de l'unité locale qui sera désignée ci-après CPU et l'interface s'effectuent conformément à un protocole défini par les éléments de programmation suivants :

### LECTURE DE LA RAM DE PIEGES A "LABELS" PAR LA CPU

La CPU lit un port de l'interface
Déclencher un accès à la RAM de pièges à "labels" (RAMCPUP)
Lire en RAM le piège à "labels" présent à l'adresse PTRLAB (pointeur de piège à "labels")
Restituer ce piège à "labels" à la CPU
Incrémenter le pointeur de piège à "labels" PTRLAB
Emettre le signal d'acquittement à la CPU
Quitter l'accès RAMCPUP

### ECRITURE DANS LA RAM DE PIEGES A "LABELS" PAR LA CPU

La CPU écrit dans un port de l'interface
Déclencher un accès de l'unité locale à la RAM de pièges à "labels" (RAMCPUP)
Ecrire en RAM à l'adresse PTRLAB le piège à "labels" émis par la CPU
Incrémenter le pointeur de piège à "labels" PTRLAB
Emettre le signal d'acquittement à la CPU
Quitter l'accès RAMCPUP

### LECTURE DE LA RAM DE RECEPTION PAR LA CPU

La CPU lit le port H/L de l'interface
Déclencher un accès RAMCPUR (de la RAM de réception par l'unité locale)

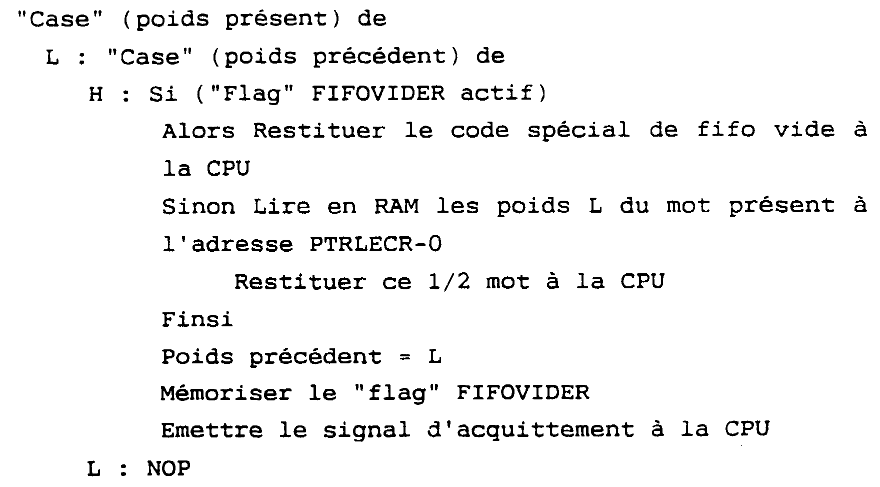

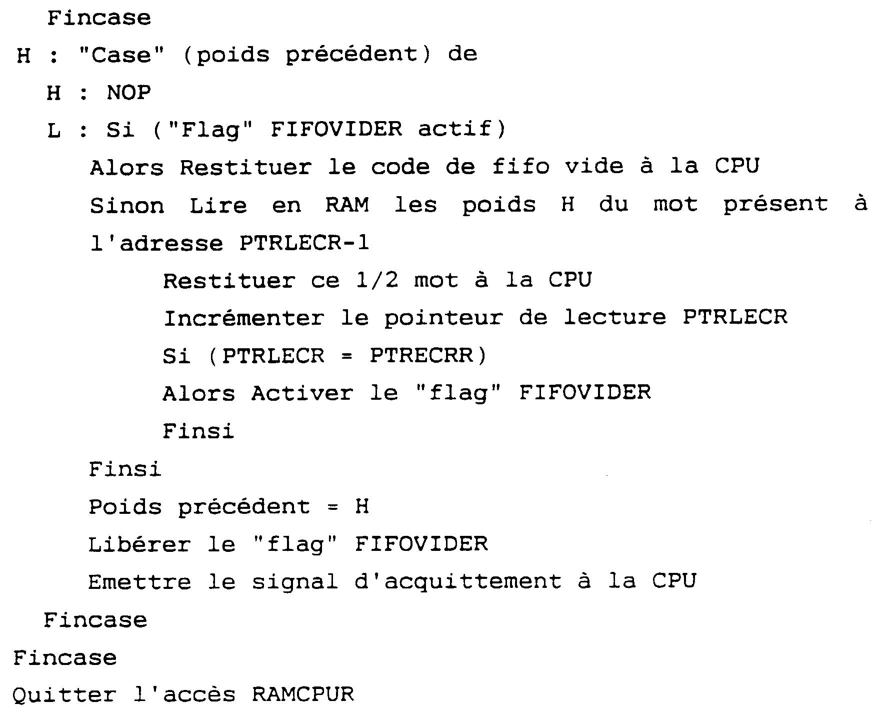

### ECRITURE DANS LA RAM DE RECEPTION PAR LA CPU

La CPU écrit dans le port H/L de l'interface
Déclencher un accès CPURAMR

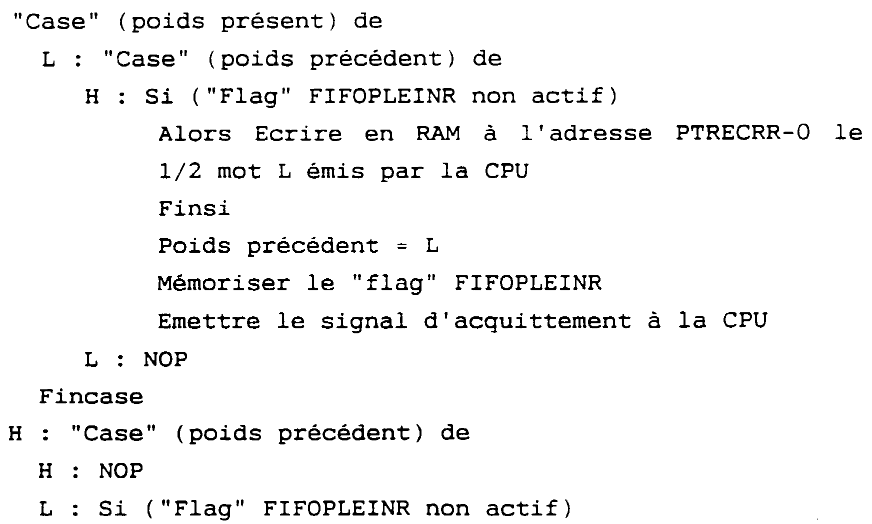

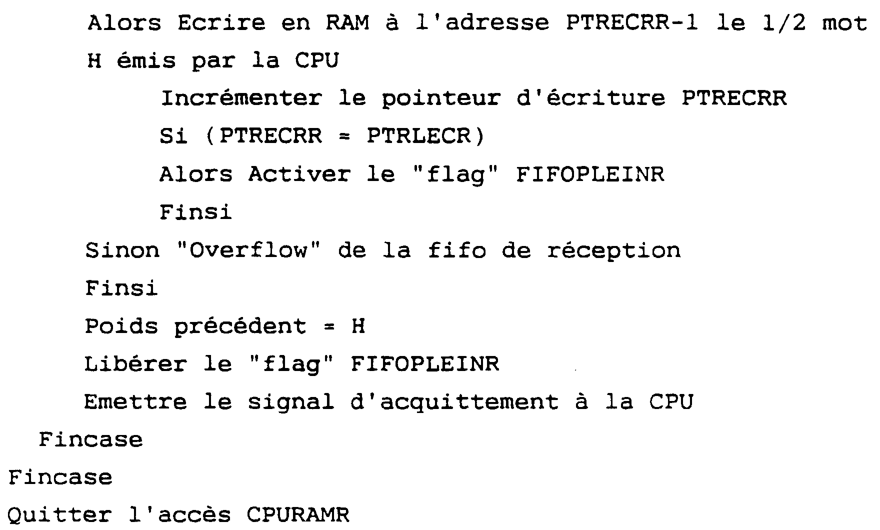

### LECTURE DE LA RAM D'EMISSION PAR LA CPU

La CPU lit le port H/L de la voie X de l'interface (X = 0/1)
Déclencher un accès RAMCPUT

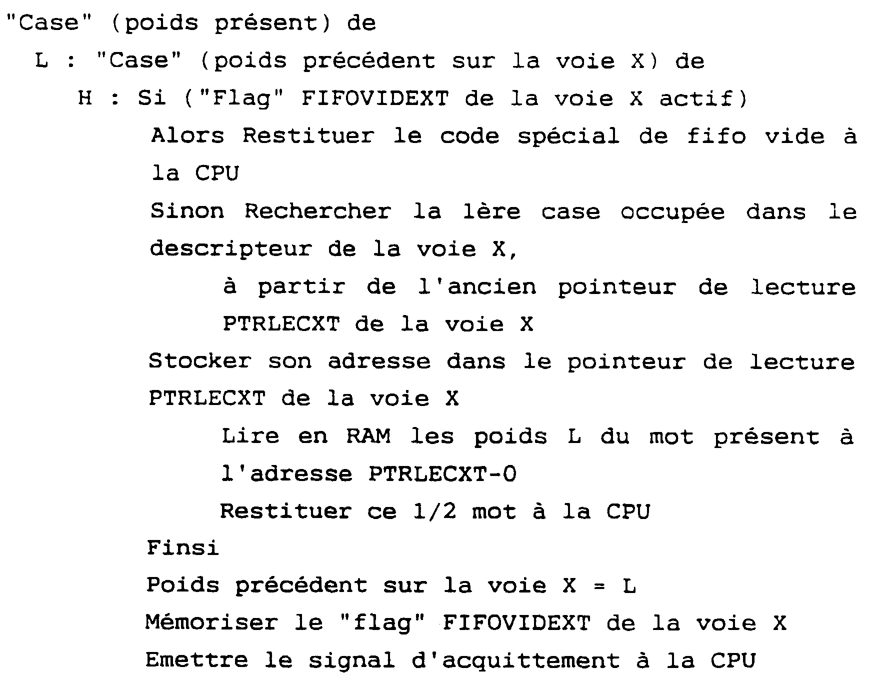

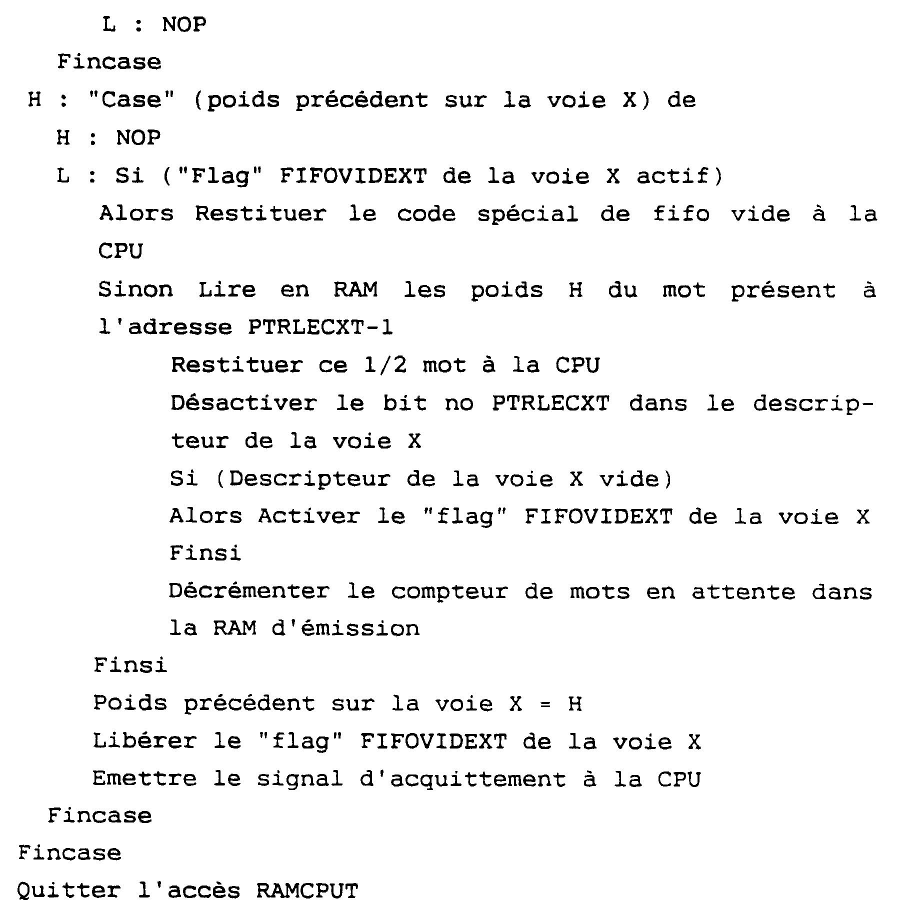

### ECRITURE DANS LA RAM D'EMISSION PAR LA CPU

La CPU écrit dans le port H/L de la voie X de l'interface (X = 0/1)
Déclencher un accès CPURAMT

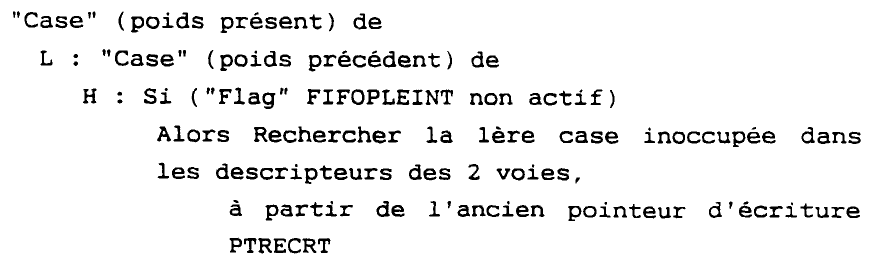

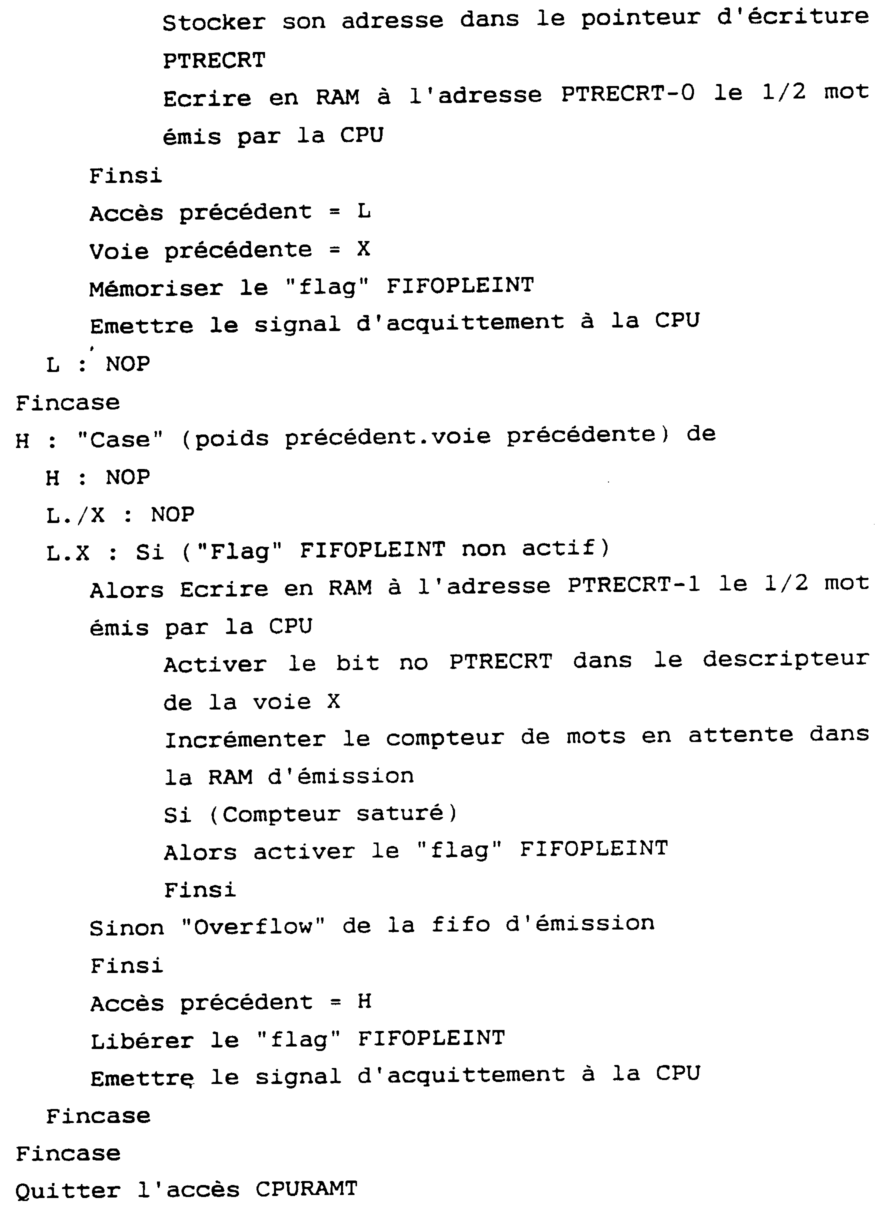

## Revendications

1. Procédé pour la sélection d'informations numériques à transmettre à un système hôte, ces informations provenant de plusieurs voies de transmission indépendantes, et étant présentées sous la forme de messages émis séquentiellement et organisés de manière à comprendre l'information utile précédée dans le temps par une information de sélection,
caractérisé en ce qu'il comprend :
- la scrutation cyclique, en continu, d'une liste de conditions programmées et mises en mémoire, chaque condition spécifiant des contrôles auxquels doit satisfaire l'information de sélection des messages intéressant le système hôte ;
- l'acquisition simultanée des informations sur lesdites voies ;
- l'activation d'un processus de sélection chaque fois que l'information de sélection d'un message reçu sur une voie a été acquise, ce processus de sélection comportant une étape de synchronisation consistant en une attente du passage du processus de scrutation par la position de début de la liste de conditions, une séquence de comparaison consistant à appliquer à l'information de sélection contenue dans le message en cours de réception les contrôles spécifiés par les conditions déterminées successivement par le processus de scrutation de la liste de conditions, et l'élaboration à partir du résultat obtenu lors de la séquence de comparaison d'une variable de sélection qui indique si le message en cours de réception intéresse le système hôte ou non, la fin du processus de sélection étant obtenue soit par l'épuisement de toutes les conditions de la liste et le retour vers la condition de début de liste, soit par lecture d'un code spécial dit code fin de liste ;
- la mémorisation des messages sélectionnés dans une mémoire tampon accessible par le système hôte.

2. Procédé selon la revendication 1,
caractérisé en ce que chacune des susdites conditions consiste en un mot binaire de sélection comprenant au moins autant de bits que n'en possèdent les informations de sélection contenues dans les messages, la comparaison s'effectuant bit par bit.

3. Procédé selon la revendication 2,
caractérisé en ce que les mots de sélection comprennent des bits supplémentaires correspondant à des traitements à faire subir au message.

4. Procédé selon l'une des revendications précédentes,
caractérisé en ce que les mots de sélection comprennent des masques, et en ce que, dans ce cas, il sera considéré qu'il y a coïncidence entre l'information de sélection contenue dans un message et un mot de sélection de la liste de conditions, si ces deux informations ne diffèrent que par des bits pour lesquels un masquage a été défini.

5. Procédé selon l'une des revendications précédentes,
caractérisé en ce que l'un des bits supplémentaires est un bit d'inversion de conditions, et en ce qu'une coïncidence fait évoluer à l'état actif la variable de sélection si le bit d'inversion est à l'état inactif et, à l'état inactif, si le bit d'inversion est à l'état actif.

6. Procédé selon la revendication 5,
caractérisé en ce que l'activation antérieure de la variable de sélection est remise en cause, en cas de coïncidence, si le bit d'inversion est actif.

7. Procédé selon l'une des revendications précédentes,
caractérisé en ce que les informations transmises sont conformes à la norme ARINC 429 et sont constituées par une succession de mots comprenant chacun :
- un premier nombre de huit bits (de 0 à 7) définissant une étiquette ou "label" ;
- un second nombre de deux bits (8 et 9) servant à identifier la source ou la destination du mot (SDI) ;
- un troisième nombre de vingt et un bits (10 à 30) contenant les données à transmettre ; et
- un bit de parité (bit 31),
et en ce que l'information de sélection comprend les premier et second nombres de bits complétés par le numéro de la voie de réception sur laquelle ce mot est arrivé.

8. Dispositif pour la mise en oeuvre du procédé selon l'une des revendications précédentes,
caractérisé en ce qu'il comprend, connectés par un bus interne (11) :
- un bloc de réception (14) connecté à au moins une ligne de transmission (5,6) par un démodulateur (7) et comprenant une mémoire tampon (15) ;
- un interface de liaison (16) avec le système hôte (P) ;
- une mémoire vive (RAM₂) associée à un circuit de gestion des données (17) ;
- un dispositif de reconnaissance de messages "pattern matching" (18) recherchant les coïncidences entre les critères de sélection des mots en cours de réception sur les deux voies et les codes dits codes de piège à "labels" stockés dans une première zone (Z₃) de la (RAM₂), ces codes étant présentés séquentiellement par un pointeur de pièges à "labels" (23) ;
- un automate (19) servant à piloter un générateur d'adresse (20) associé à la mémoire (RAM₂) par l'intermédiaire d'un pointeur de réception (22), d'un pointeur d'émission (21) et d'un pointeur de liste des conditions (23).

9. Dispositif selon la revendication 8,
caractérisé en ce qu'il comprend en outre, raccordé au bus interne, un bloc d'émission (12) connecté à plusieurs voies de transmission (8,9) par l'intermédiaire d'un modulateur (10) de ligne, un pointeur d'émission (21) commandé par l'automate (19) et pilotant le générateur d'adresse (20) de la mémoire (RAM₂).

10. Dispositif selon la revendication 8 ou 9,
caractérisé en ce que la mémoire (RAM₂) comprend une seconde zone (Z₁) structurée à la façon d'une pile FIFO avec allocation dynamique, dans laquelle sont stockées les messages à émettre fournis par le système hôte (P).

## Patentansprüche

1. Verfahren zur Auswahl von digitalen Informationen, die zu einem Hostsystem übertragen werden sollen, wobei diese Informationen von mehreren unabhängigen Übertragungskanälen stammen und in Form von Nachrichten vorliegen, die sequentiell ausgegeben werden und so organisiert sind, daß ihre Nutzinformation in der Zeit hinter einer Auswahlinformation liegt,
dadurch gekennzeichnet, daß es enthält:
- die zyklische, kontinuierliche Abfrage einer Liste von programmierten und gespeicherten Bedingungen, wobei jede Bedingung Kontrollen spezifiziert, die die Auswahlinformation der das Hostsystem interessierenden Nachrichten befriedigen muß;
- die gleichzeitige Erfassung der Informationen auf den Kanälen;
- die Aktivierung eines Auswahlprozesses immer dann, wenn die Auswahlinformation einer auf einem Kanal empfangenen Nachricht erfaßt wurde, wobei dieser Auswahlprozeß einen Synchronisationsschritt, der in einem Warten auf den Durchgang des Abfrageprozesses durch die Anfangsposition der Liste von Bedingungen besteht, eine Vergleichsfolge, die darin besteht, an die in der gerade empfangenen Nachricht enthaltene Auswahlinformation die Kontrollen anzuwenden, die von den Bedingungen spezifiziert werden, die nacheinander von dem Abfrageprozeß der Liste von Bedingungen bestimmt werden, und die Ausarbeitung einer Auswahlvariablen ausgehend vom während der Vergleichsfolge erhaltenen Ergebnis enthält, die angibt, ob die gerade empfangene Nachricht das Hostsystem betrifft oder nicht, wobei das Ende des Auswahlprozesses entweder durch Erschöpfung aller Bedingungen der Liste und Rückkehr zur Anfangsbedingung der Liste oder durch Lesen eines speziellen, Listenendkode genannten Kodes erhalten wird;
- die Speicherung der ausgewählten Nachrichten in einem für das Hostsystem zugänglichen Pufferspeicher.

2. Verfahren nach Anspruch 1, dadurch gekennzeichnet, daß jede der erwähnten Bedingungen aus einem binären Auswahlwort besteht, das mindestens ebensoviele Bits wie die in den Nachrichten enthaltenen Auswahlinformationen besitzt, wobei der Vergleich Bit für Bit erfolgt.

3. Verfahren nach Anspruch 2, dadurch gekennzeichnet, daß die Auswahlworte zusätzliche Bits enthalten, die Verarbeitungen entsprechen, denen die Nachricht unterzogen werden soll.

4. Verfahren nach einem der vorhergehenden Ansprüche, dadurch gekennzeichnet, daß die Auswahlworte Masken enthalten, und daß in diesem Fall angenommen wird, daß es eine Koinzidenz zwischen der in einer Nachricht enthaltenen Auswahlinformation und einem Auswahlwort der Liste von Bedingungen gibt, wenn diese beiden Informationen sich nur durch Bits unterscheiden, für die eine Maskierung definiert wurde.

5. Verfahren nach einem der vorhergehenden Ansprüche, dadurch gekennzeichnet, daß eines der zusätzlichen Bits ein Bedingungsumkehrbit ist und daß eine Koinzidenz die Auswahlvariable in den aktiven Zustand bringt, wenn das Umkehrbit im inaktiven Zustand ist, und in den inaktiven Zustand, wenn das Umkehrbit im aktiven Zustand ist.

6. Verfahren nach Anspruch 5, dadurch gekennzeichnet, daß die vorhergehende Aktivierung der Auswahlvariablen bei einer Koinzidenz wieder in Frage gestellt wird, wenn das Umkehrbit aktiv ist.

7. Verfahren nach einem der vorhergehenden Ansprüche, dadurch gekennzeichnet, daß die übertragenen Informationen der Norm ARINC 429 entsprechen und aus einer Folge von Wörtern bestehen, die je enthalten:
- eine erste Anzahl von acht Bits (von 0 bis 7), die ein Etikett oder "Label" definieren;
- eine zweite Anzahl von zwei Bits (8 und 9), die die Quelle oder das Ziel des Worts (SDI) identifizieren;
- eine dritte Anzahl von einundzwanzig Bits (10 bis 30), die die zu übertragenden Daten enthalten, und
- ein Paritätsbit (Bit 31),
und daß die Auswahlinformation die erste und die zweite Anzahl von Bits vervollständigt durch die Nummer des Empfangskanals enthält, auf dem dieses Wort angekommen ist.

8. Vorrichtung zur Anwendung des Verfahrens gemäß einem der vorhergehenden Ansprüche,
dadurch gekennzeichnet, daß sie über einen inneren Bus (11) verbunden aufweist:
- einen Empfangsblock (14), der mit mindestens einer Übertragungsleitung (5, 6) über einen Demodulator (7) verbunden ist und einen Pufferspeicher (15) enthält;
- eine Verbindungs-Schnittstelle (16) mit dem Hostsystem (P);
- einen Arbeitsspeicher RAM₂), der einer Datenverwaltungsschaltung (17) zugeordnet ist;
- eine Vorrichtung zur Erkennung von Nachrichten "pattern matching" (18), die die Koinzidenzen zwischen den Auswahlkriterien der gerade auf den beiden Kanälen empfangenen Wörter und der sogenannten "Label"-Fallenkodes sucht, die in einem ersten Bereich (Z₃) des Speichers (RAM₂) gespeichert sind, wobei diese Kodes sequentiell von einem "Label"-Fallen-Zeiger (23) angezeigt werden;
- einen Automaten (19), der einen Adressengenerator (20) steuert, welcher dem Speicher (RAM₂) über einen Empfangs-Zeiger (22), einen Sende-Zeiger (21) und einen Bedingungslisten-Zeiger (23) zugeordnet ist.

9. Vorrichtung nach Anspruch 8, dadurch gekennzeichnet, daß sie weiter an den inneren Bus angeschlossen einen Sendeblock (12), der mit mehreren Übertragungskanälen (8, 9) über einen Kanalmodulator (10) verbunden ist, und einen Sende-Zeiger (21) aufweist, der vom Automaten (19) gesteuert wird und den Adressengenerator (20) des Speichers (RAM₂) steuert.

10. Vorrichtung nach Anspruch 8 oder 9, dadurch gekennzeichnet, daß der Speicher (RAM₂) einen zweiten Bereich (Z₁) aufweist, der nach Art eines FIFO-Speichers mit dynamischer Zuordnung ausgebildet ist, in dem die vom Hostsystem (P) gelieferten und zu sendenden Nachrichten gespeichert sind.

## Claims

1. Method of selecting digital information to be transmitted to a local unit originating from one or more independent transmission lines and in the form of messages sent sequentially and organized in such a way as to comprise the wanted information preceded in time by selection information,
characterized in that it comprises :
- continuous cyclical scanning of a list of programmed conditions in memory, each condition specifying checks which the message selection information relating to the local unit has to pass ;
- simultaneous acquisition of information on said channels ;
- activation of a selection process each time that the selection information of a message received on a channel has been acquired, the selection process including a synchronization stage which waits for the scanning process to cross the start of said list of conditions, a comparison sequence applying to the selection information contained in the message being received the checks specified by the conditions succssively determined by the process of scanning the list of conditions, and the production, based on the result obtained during the sequence of comparison, of a selection variable which indicates if the message being received is of interest to said local unit or not, the selection process ending either when all the conditions from said list have been exhausted and on returning to the start of list condition or upon reading a special end of list code ;
- memorization of the messages selected in a buffer accessible to said local unit.

2. Method according to claim 1,
characterized in that each of said conditions is a selection binary word comprising at least as many bits as the selection information contained in the messages, said comparison being carried out bit by bit.

3. Method according to claim 2,
characterized in that said selection words comprise additional bits representing processing to be applied to the message.

4. Method according to one of the preceding claims,
characterized in that said selection words comprise masks, and in that the selection information contained in a message is regarded as coinciding with a selection word from said list of conditions if said selection information and said selection word differ only in respect of bits for which a mask has been defined.

5. Method according to one of the preceding claims,
characterized in that one of said additional bits is a condition reversal bit, and in that coincidence causes said selection variable to change to the active state if said condition reversal bit is inactive and vice versa.

6. Method according to claim 5,
characterized in that previous activation of said selection variable is reviewed in the event of coincidence if said condition reversal bit is active.

7. Method according to one of the preceding claims,
characterized in that the information transmitted conforms to the ARINC 429 standard and comprises a succession of words each comprising :
- a first number on eight bits (bits 0 through 7) defining a label ;
- a second number (SDI) on two bits (bits 8 and 9) identifying the source or the destination of the word ;
- a third number on 21 bits (bits 10 through 30) containing the data to be transmitted ; and
- a parity bit (bit 31) ,
and in that the selection information comprises the first and second numbers of bits to which is added the number of the receive channel on which the word as received.

8. Device for implementing the method according to one of the preceding claims,
characterized in that it comprises, connected by an internal bus (11) :
- a receive unit (14) connected to at least one transmission line (5, 6) by a demodulator (7) and comprising a buffer (15) ;
- an interface (16) to said local unit (P);
- a first random access memory (RAM₂) associated with a data management circuit (17) ;
- a pattern matching message recognition device (18) looking for coincidence between the selection criteria of the words being received on both channels and label trap codes stored in a first area (Z₃) of the random access memory (RAM₂), the codes being presented sequentially by a label trap pointer (23) ;
- a control unit (19) driving an address generator (20) associated with said random access memory (RAM₂) through a receive pointer (22), a send pointer (21) and a condition list pointer (23).

9. Device according to claim 8,
characterized in that it further comprises, connected to said internal bus, a send unit (12) connected to several transmission channels (8, 9) by a line modulator (10), and a send pointer (21) controlled by said control unit (19) and driving said address generator (20) and said random access memory (RAM₂).

10. Device according to claim 8 or 9,
characterized in that said random access memory (RAM₂) comprises a second area (Z₁) structured as an FIFO stack using dynamic allocation in which are stored the messages to be sent, supplied by the local unit (P).
